# EUROPEAN PATENT APPLICATION

(11) **EP 4 614 947 A1**
(43) Date of publication of application: **10.09.2025**
(21) Application number: 23890583.0
(22) Date of filing: 31.10.2023
(51) Int. Cl.: H04L 67/10

(54) **ELASTIC IP CONFIGURATION METHOD, DEVICE, AND SYSTEM BASED ON CLOUD COMPUTING TECHNOLOGY**

(30) Priority: 14.11.2022 CN 202211423939; 03.02.2023 CN 202310065200
(71) Applicant: Huawei Cloud Computing Technologies Co., Ltd., Guiyang, Guizhou 550025 (CN)
(72) Inventor: WANG, Ping, Shenzhen, Guangdong 518129 (CN); ZHAO, Haifei, Shenzhen, Guangdong 518129 (CN); ZHANG, Tangkai, Shenzhen, Guangdong 518129 (CN)
(74) Representative: Isarpatent
(86) International application number: PCT/CN2023/128542
(87) International publication number: WO 2024/104147

(57) **Abstract**

This application provides a method for configuring an elastic IP based on a cloud computing technology, an apparatus, and a system. The method includes: A cloud management platform receives access point information, where the information indicates an access point of an elastic IP purchased by a tenant, and the access point is located in a first data center in a first availability zone; the cloud management platform receives first cloud resource information, where the information indicates a first cloud resource bound to the elastic IP and a second availability zone in which the first cloud resource is located, and the first cloud resource is set in a second data center in the second availability zone; and the cloud management platform establishes a first communication channel between the first data center and the second data center for the tenant, where the channel is used to transmit a packet that is sent from a client to the access point and whose destination address is the elastic IP from the first data center to the cloud resource in the second data center. In the foregoing method, a cloud resource and a public network resource in different availability zones are interconnected, so that the tenant can flexibly deploy the cloud resource based on a service requirement, to reduce costs of using the public network resource by the tenant.

## Description

### TECHNICAL FIELD

This application relates to the field of cloud computing technologies, and in particular, to a method for configuring an elastic IP based on a cloud computing technology, an apparatus, and a system.

### BACKGROUND

Cloud computing has emerged worldwide. With a flexible, efficient, low-cost, and energy-saving operation mode, the cloud computing has become an important engine for promoting green development of the industry and a new business platform in the 21^{st} century. In a cloud computing scenario, a cloud resource deployed by a tenant in an infrastructure of a cloud vendor needs to access a public network and needs to be accessed by the public network. Therefore, the cloud computing vendor needs to provide public network resource access and scheduling services, and a public network resource includes an elastic IP (Elastic IP, EIP) and a bandwidth. In a related elastic public network service, an elastic public network access point is invisible to the tenant. The cloud vendor provides, based on a region in which the cloud resource of the tenant is located, a preferred access point for the region. An elastic IP in a same region provides a public network access capability only for instances in the region. However, most regions are located in first-tier cities, and elastic IP and bandwidth resources are expensive. A cheap resource in a surrounding provincial capital and second-tier city cannot be connected to the regions. Costs of purchasing a public network resource are high, and the cloud resource of the tenant cannot be flexibly deployed. A related technology provides an edge service for the foregoing problems. An edge site is constructed in a non-first-tier city, to transfer computing, storage, and network resources to a corresponding city. However, this solution has high construction costs, long construction cycles, and poor cloud-edge interconnection experience, and cannot meet requirements of some customers who do not need to transfer computing and network resources but only need low-cost bandwidth access at the edge.

### SUMMARY

To resolve a problem in the conventional technology, this application provides a method for configuring an elastic IP based on a cloud computing technology, an apparatus, and a system, to interconnect a cloud resource and a public network resource located in different availability zones, so that an elastic public network access point is visible to a tenant. The tenant can deploy a cloud resource and select an access point based on a service requirement, and does not need to deploy the cloud resource in a region in which the access point is located, to reduce costs of using the public network resource by the tenant. In addition, a cloud vendor can implement a solution of configuring an elastic IP with low construction costs and high universality.

According to a first aspect, this application provides a method for configuring an elastic IP based on a cloud computing technology. The method is applied to a cloud management platform, the cloud management platform is configured to manage an infrastructure, the infrastructure includes a first data center that is set in a first availability zone and a second data center that is set in a second availability zone, and the method includes: The cloud management platform receives access point information entered by a tenant, where the access point information indicates an access point of an elastic IP purchased by the tenant, and the access point is located in the first data center in the first availability zone. The cloud management platform receives first cloud resource information entered by the tenant, where the first cloud resource information indicates a first cloud resource bound to the elastic IP and the second availability zone in which the first cloud resource is located, and the first cloud resource is set in the second data center in the second availability zone. The cloud management platform establishes a first communication channel between the first data center and the second data center for the tenant, where the first communication channel is used to transmit a packet that is sent from a client to the access point and whose destination address is the elastic IP from the first data center to the cloud resource in the second data center.

According to the foregoing solution, the cloud management platform establishes a communication channel for a public network resource purchased by the tenant and a data center in which a cloud resource of the tenant is located in different availability zones, so that the public network resource of the tenant and the cloud resource of the tenant can be located in two availability zones. The tenant can independently select an access point of the public network resource that the tenant wants to access. The public network resource does not need to be set by a cloud vendor by default to be in an availability zone the same as or different from the cloud resource of the tenant in a region the same as the cloud resource of the tenant. The tenant can flexibly select an access point of the public network resource based on a service requirement of the tenant, to improve deployment flexibility, and reduce resource deployment costs.

According to a possible implementation of the first aspect, the method further includes: The cloud management platform receives first unbinding information entered by the tenant, where the first unbinding information indicates the cloud management platform to unbind the elastic IP from the first cloud resource.

According to the foregoing solution, the cloud management platform can unbind, based on an instruction of the tenant, a public network resource that is of the tenant and that has been bound to the cloud resource. This facilitates flexible deployment by the tenant.

According to a possible implementation of the first aspect, the method further includes: The cloud management platform receives second cloud resource information entered by the tenant, where the second cloud resource information indicates a second cloud resource bound to the elastic IP and a third availability zone in which the second cloud resource is located, and the second cloud resource is set in a third data center in the third availability zone. The cloud management platform binds the elastic IP to the second cloud resource. The cloud management platform establishes a second communication channel between the first data center and the third data center for the tenant, where the second communication channel is used to transmit a packet that is sent from the client to the access point and whose destination address is the elastic IP from the first data center to the cloud resource in the third data center.

According to the foregoing solution, the cloud management platform can bind the second cloud resource of the tenant to the public network resource based on an instruction of the tenant. This facilitates flexible deployment by the tenant.

According to a possible implementation of the first aspect, the method further includes: The cloud management platform receives second cloud resource information entered by the tenant, where the second cloud resource information indicates a second cloud resource bound to the elastic IP and a third availability zone in which the second cloud resource is located, and the second cloud resource is set in a third data center in the third availability zone. The cloud management platform unbinds the elastic IP from the first cloud resource. The cloud management platform binds the elastic IP to the second cloud resource. The cloud management platform establishes a third communication channel between the first data center and the third data center for the tenant, where the third communication channel is used to transmit a packet that is sent from the client to the access point and whose destination address is the elastic IP from the first data center to the cloud resource in the third data center.

According to the foregoing solution, when the tenant binds a new cloud resource to the elastic IP that has been bound to another cloud resource, the cloud management platform automatically unbinds the elastic IP from the original cloud resource, and binds the elastic IP to the cloud resource that is newly entered by the tenant and that is to be bound to the elastic IP.

According to a possible implementation of the first aspect, the method further includes: The cloud management platform receives bandwidth configuration information entered by the tenant, where the bandwidth configuration information indicates a bandwidth of the elastic IP. The cloud management platform sets the bandwidth for the communication channel.

In some embodiments, a public network resource includes an elastic IP resource and a bandwidth resource. According to the foregoing solution, the tenant can configure the bandwidth resource in the public network resource of the tenant, and the cloud management platform sets, based on the bandwidth configuration information, the bandwidth for the communication channel between the data center in which the cloud resource is located and the data center in which the access point of the elastic IP is located.

According to a possible implementation of the first aspect, a cross-region backbone network is further set in the infrastructure, and the cross-region backbone network is used to connect cross-region data centers in the infrastructure. That the cloud management platform establishes a communication channel between the first data center and the second data center for the tenant includes: The cloud management platform establishes the communication channel between the first data center and the second data center through the cross-region backbone network when the first availability zone and the second availability zone are located in different regions.

According to the foregoing solution, the data center in which the access point of the elastic IP purchased by the tenant is located and the data center in which the cloud resource of the tenant is located are in different regions. The cloud management platform establishes the communication channel for the two data centers through the cross-region backbone network that is set in the infrastructure, so that the tenant can deploy the cloud resource and the elastic IP in different regions based on a service requirement of the tenant, to improve resource deployment flexibility, and the cloud vendor implements a full-domain elastic IP configuration solution at low costs.

According to a possible implementation of the first aspect, that the first availability zone and the second availability zone are located in different regions includes: The first availability zone and the second availability zone are located in different regions of a same major region.

In some embodiments, major regions include, for example, Chinese Mainland, Asia Pacific, and South Africa, and a major region includes different regions. For example, the Chinese Mainland major region includes regions such as North China-Beijing 1, North China-Beijing 4, and East China-Shanghai 1. According to the foregoing solution, the data center in which the access point of the elastic IP purchased by the tenant is located and the data center in which the cloud resource of the tenant is located are in different regions of a same major region, for example, respectively in North China and East China. The cloud management platform establishes the communication channel for the two data centers through the cross-region backbone network that is set in the infrastructure, so that the tenant can deploy the cloud resource and the elastic IP in different regions of a same major region based on a service requirement of the tenant, to improve resource deployment flexibility, and the cloud vendor implements a full-domain elastic IP configuration solution at low costs.

According to a possible implementation of the first aspect, that the first availability zone and the second availability zone are located in different regions includes: The first availability zone and the second availability zone are located in different major regions.

In some embodiments, major regions include, for example, Chinese Mainland, Asia Pacific, and South Africa, and a major region includes different regions. For example, the Chinese Mainland major region includes regions such as North China and East China, and the Asia Pacific major region includes regions such as Singapore and Bangkok. According to the foregoing solution, the data center in which the access point of the elastic IP purchased by the tenant is located and the data center in which the cloud resource of the tenant is located are in different major regions. The cloud management platform establishes the communication channel for the two data centers through the cross-region backbone network that is set in the infrastructure, so that the tenant can deploy the cloud resource and the elastic IP in different major regions based on a service requirement of the tenant, to improve resource deployment flexibility, and the cloud vendor implements a full-domain elastic IP configuration solution at low costs.

According to a possible implementation of the first aspect, the method further includes: The cloud management platform charges the tenant for using the cross-region backbone network.

According to the foregoing solution, when providing an elastic public network service, the cloud vendor charges the tenant for using the cross-region backbone network, rather than just charging for an elastic public network resource. In an embodiment provided in the present invention, a fee of the cross-region backbone network is related to a bandwidth type.

According to a possible implementation of the first aspect, a cross-availability-zone network is further set in the infrastructure, and the cross-availability-zone network is used to connect cross-availability-zone data centers in a same region in the infrastructure. That the cloud management platform establishes a communication channel between the first data center and the second data center for the tenant includes: The cloud management platform establishes the communication channel between the first data center and the second data center in the cross-availability-zone network when the first availability zone and the second availability zone are located in a same region.

According to the foregoing solution, the data center in which the access point of the elastic IP purchased by the tenant is located and the data center in which the cloud resource of the tenant is located are in different availability zones of a same region. The cloud management platform establishes the communication channel for the two data centers through the cross-region backbone network that is set in the infrastructure, so that the tenant can deploy the cloud resource and the elastic IP in different availability zones of a same region based on a service requirement of the tenant, to improve resource deployment flexibility, and the cloud vendor implements a full-domain elastic IP configuration solution at low costs.

According to a possible implementation of the first aspect, that the first availability zone and the second availability zone are located in a same region includes: The first availability zone and the second availability zone are located in a same city.

In some embodiments, regions include, for example, North China and East China, and a region includes different availability zones. For example, the North China region includes availability zones such as a Beijing 1 availability zone A, a Beijing 1 availability zone B, and a Beijing 1 availability zone C. According to the foregoing solution, the data center in which the access point of the elastic IP purchased by the tenant is located and the data center in which the cloud resource of the tenant is located are in availability zones in a same city of a same region, for example, are respectively located in a Beijing availability zone A and a Beijing availability zone B. The cloud management platform establishes the communication channel for the two data centers through the cross-region backbone network that is set in the infrastructure, so that the tenant can deploy the cloud resource and the elastic IP in availability zones in a same city of a same region based on a service requirement of the tenant, to improve resource deployment flexibility, and the cloud vendor implements a full-domain elastic IP configuration solution at low costs.

According to a possible implementation of the first aspect, that the first availability zone and the second availability zone are located in a same region includes: The first availability zone and the second availability zone are located in different cities of a same region.

In some embodiments, regions include, for example, North China and East China, and a region includes different availability zones. For example, the East China region includes availability zones such as a Shanghai availability zone A, a Shanghai availability zone B, and a Hangzhou availability zone A. According to the foregoing solution, the data center in which the access point of the elastic IP purchased by the tenant is located and the data center in which the cloud resource of the tenant is located are in availability zones in different cities of a same region, for example, are respectively located in the Shanghai availability zone A and the Hangzhou availability zone A. The cloud management platform establishes the communication channel for the two data centers through the cross-region backbone network that is set in the infrastructure, so that the tenant can deploy the cloud resource and the elastic IP in availability zones in different cities of a same region based on a service requirement of the tenant, to improve resource deployment flexibility, and the cloud vendor implements a full-domain elastic IP configuration solution at low costs.

According to a possible implementation of the first aspect, the method further includes: The cloud management platform charges the tenant for using the cross-availability-zone network.

According to the foregoing solution, when providing the elastic public network service, the cloud vendor charges the tenant for using the cross-availability-zone network, rather than just charging for the elastic public network resource. In an embodiment provided in the present invention, a fee of the cross-availability-zone network is related to a bandwidth type.

According to a possible implementation of the first aspect, the method further includes: The cloud management platform reminds the tenant of a bandwidth type used by the tenant, where the bandwidth type is determined based on a region in which the first availability zone and the second availability zone are located.

In some embodiments, the bandwidth type is determined based on the region in which the first availability zone and the second availability zone are located. For example, a cross-region bandwidth is used when the first availability zone and the second availability zone are located in different major regions, a major region bandwidth is used when the first availability zone and the second availability zone are located in different regions of a same major region, a region bandwidth is used when the first availability zone and the second availability zone are located in different cities of a same region, and a metro bandwidth is used when the first availability zone and the second availability zone are located in a same city of a same region. According to the foregoing solution, the tenant can select the bandwidth type based on a service requirement of the tenant when configuring the bandwidth by using the elastic public network service, so that bandwidth operation of the backbone network and the cross-availability-zone network of the tenant and the cloud vendor are more refined. This facilitates cost control.

According to a second aspect, this application provides a cloud management platform. The cloud management platform is configured to manage an infrastructure, the infrastructure includes a first data center that is set in a first availability zone and a second data center that is set in a second availability zone, and the cloud management platform includes: an information receiving module, configured to receive access point information entered by a tenant, where the access point information indicates an access point of an elastic IP purchased by the tenant, and the access point is located in the first data center in the first availability zone, and the information receiving module is further configured to receive first cloud resource information entered by the tenant, where the first cloud resource information indicates a first cloud resource bound to the elastic IP and the second availability zone in which the first cloud resource is located, and the first cloud resource is set in the second data center in the second availability zone; a communication channel establishment module, configured to establish a first communication channel between the first data center and the second data center for the tenant, where the first communication channel is used to transmit a packet that is sent from a client to the access point and whose destination address is the elastic IP from the first data center to the cloud resource in the second data center; and a binding and unbinding module, configured to bind the elastic IP to the first cloud resource based on the access point information and cloud resource information.

The second aspect or any implementation of the second aspect is an apparatus implementation corresponding to the first aspect or any implementation of the first aspect. The descriptions in the first aspect or any implementation of the first aspect are applicable to the second aspect or any implementation of the second aspect. Details are not described herein again.

According to a third aspect, this application provides a public cloud system, including: an access point, located in a first data center in a first region, and is configured with an elastic IP; a cloud resource, located in a second data center in a second region, where the first region and the second region are located in different geographical regions; and a backbone network, configured to connect the first data center in the first region and the second data center in the second region. The access point is further configured to receive a packet whose destination address is the elastic IP from a client located in the first region, and send the packet to the cloud resource in the second data center through the backbone network.

According to a fourth aspect, this application provides a computing device cluster, including at least one computing device. Each computing device includes a processor and a memory, and the processor of the at least one computing device is configured to execute instructions stored in the memory of the at least one computing device, so that the computing device cluster performs any possible method according to the first aspect.

According to a fifth aspect, this application provides a computer program product including instructions. When the instructions are run by a computing device cluster, the computing device cluster is enabled to perform any possible method according to the first aspect.

According to a sixth aspect, a computer-readable storage medium is provided, including computer program instructions. When the computer program instructions are executed by a computing device cluster, the computing device cluster performs any possible method according to the first aspect.

### BRIEF DESCRIPTION OF DRAWINGS

To describe technical solutions in embodiments of the present invention more clearly, the following briefly introduces accompanying drawings used in describing the embodiments. It is clear that the accompanying drawings in the following descriptions show some embodiments of the present invention, and a person of ordinary skill in the art may still derive other drawings from these accompanying drawings without creative efforts.
FIG. 1 is a diagram of distribution of data centers according to an embodiment of this application;
FIG. 2 is a diagram of a structure of a system for configuring an elastic IP according to an embodiment of this application;
FIG. 3 is a schematic flowchart of a method for configuring an elastic IP according to an embodiment of this application;
FIG. 4 is a diagram of an elastic IP configuration interface according to an embodiment of this application;
FIG. 5 is a diagram of a structure for elastic public network access according to an embodiment of this application;
FIG. 6 is a diagram of another structure for elastic public network access according to an embodiment of this application;
FIG. 7 is a diagram of a structure of a cloud management platform apparatus according to an embodiment of this application;
FIG. 8 is a diagram of a structure of a computing device according to an embodiment of this application;
FIG. 9 is a diagram of a structure of a computing device cluster according to an embodiment of this application; and
FIG. 10 is a diagram of a structure of another computing device cluster according to an embodiment of this application.

### DESCRIPTION OF EMBODIMENTS

The following clearly and completely describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

An "embodiment" mentioned in this specification means that a particular feature, structure, or characteristic described with reference to this embodiment may be included in at least one embodiment of this application. The phrase appearing at various locations in this specification may neither necessarily mean a same embodiment, nor mean an independent or optional embodiment exclusive from another embodiment. It is explicitly and implicitly understood by a person skilled in the art that embodiments described in the specification may be combined with another embodiment.

Some terms and related technologies in this application are first described with reference to accompanying drawings, to help a person skilled in the art have a better understanding.

Elastic IP (Elastic IP, EIP): provides an independent public IP resource including a public IP address and a public network bandwidth, and can be bound to or unbound from a cloud resource, such as a virtual machine, a bare metal server, a virtual IP, an elastic load balancer, a NAT gateway, a container, and a dedicated host.

Access point: a location of an elastic IP resource. Corresponding to a point of presence (Point of Presence, POP) or a region (Region) of a cloud vendor, the access point is located in a data center of the cloud vendor.

Point of presence (Point of Presence, POP): In the field of cloud computing, the point of presence is located at an edge of a cloud network provided by a cloud vendor, and external access can interact with the cloud network through the point of presence.

Cloud resource: The cloud resource includes one or any combination of a virtual machine, a container, a bare metal server, and a dedicated host.

Major region: a location of a data center. The major region includes a plurality of regions (Region). In an embodiment provided in this application, major regions include, for example, Chinese Mainland and Asia Pacific.

Region (Region): a location of a data center. Regions are usually divided based on geographical locations and network latencies, and are also referred to as geographical regions. A public service such as elastic computing is shared in a same region. In an embodiment provided in this application, regions include, for example, North China and East China, or North China-Beijing 1 and East China-Shanghai 1.

Availability zone (Availability Zone, AZ): a location of a data center. The availability zone is a collection of one or more independent physical data centers with power and network in a same region. A plurality of availability zones in the region are connected through high-speed optical fibers. In an embodiment provided in this application, availability zones include, for example, a Beijing 1 availability zone A and a Beijing 1 availability zone B.

Backbone network (Backbone Network): A large-scale high-speed network that connects a plurality of regions.

Cross-availability-zone network: A high-speed network that connects a plurality of availability zones in a region.

Cloud management platform and infrastructure: The cloud management platform is configured to manage an infrastructure of a cloud vendor. The infrastructure is a plurality of cloud data centers that are set in different regions, and at least one cloud data center is set in each region. The cloud management platform may provide an interface related to a cloud computing service, for example, a configuration page or an application programming interface (Application Programming Interface, API) for a tenant to access a cloud service. The tenant may log in to the cloud management platform by using a pre-registered account and password, and after the login succeeds, the tenant selects and purchases a cloud service provided by a cloud data center in a predetermined region. The cloud service is, for example, an object storage service, a virtual machine service, a container service, or another known cloud service.

Tenant: The tenant is a top-level object used to manage a cloud service and/or a cloud resource. The tenant registers a tenant account and sets a tenant password on a cloud management platform through a local client (for example, a browser). The local client remotely logs in to the cloud management platform through the local client by using the tenant account and the set tenant password. The cloud management platform provides a configuration page or an API for the tenant to configure and use a cloud service. The cloud service is specifically provided by an infrastructure managed by the cloud management platform.

Domain name service (Domain Name Service, DNS): is a service for converting a domain name into an IP address for computer connection, can route a terminal user to a corresponding resource, and is usually a database that maps domain names and IP addresses to each other.

In an existing elastic public network service, an elastic public network resource is strongly related to a region (Region). However, most regions are located in first-tier cities, and elastic IP and bandwidth resources are expensive. A cheap resource in a surrounding provincial capital and second-tier city cannot be connected to the regions. Costs of purchasing the public network resource are high, and a cloud resource of a tenant cannot be flexibly deployed. A related technology provides an edge service for the foregoing situations. An edge site is constructed in a non-first-tier city, to transfer computing, storage, and network resources to a corresponding city. However, this solution has high construction costs, long construction cycles, and poor cloud-edge interconnection experience, and cannot meet requirements of some customers who do not need to transfer computing and network resources but only need low-cost bandwidth access at the edge.

This application provides a method for configuring an elastic IP based on a cloud computing technology, an apparatus, and a system. There is no need to limit a cloud resource and a public network resource to belong to a same region, so that a tenant can interconnect a cloud resource in any region on a cloud with a public network resource, and the tenant can flexibly deploy the cloud resource of the tenant based on a service requirement of the tenant, to reduce costs of using the public network resource by the tenant, implement refined bandwidth operation, and facilitate cost control of the tenant and a cloud vendor.

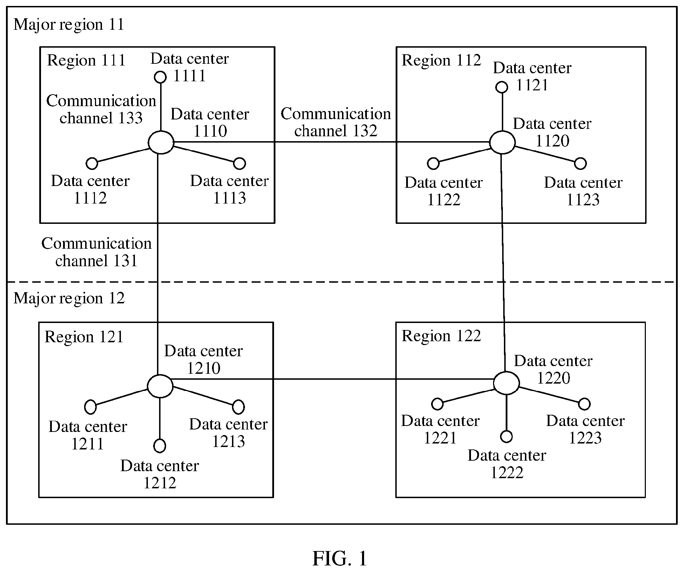

To describe distribution of data centers in embodiments of the present invention, refer to FIG. 1. FIG. 1 is a diagram of distribution of data centers according to an embodiment of this application. As shown in FIG. 1, the diagram shows distribution of data centers in geographical locations and regions. The diagram includes a major region 11 and a major region 12. The major region 11 includes a region 111 and a region 112. The major region 12 includes a region 121 and a region 122. The region 111 includes a data center 1110, a data center 1111, a data center 1112, and a data center 1113. Another region is similar. The data center 1110 and a data center 1210 are interconnected through a cross-major-region communication channel 131, and the communication channel 131 is established through a cross-region backbone network provided by a cloud vendor. The data center 1110 and a data center 1120 are interconnected through an intra-major-region and cross-region communication channel 132, and the communication channel 132 is established through the cross-region backbone network provided by the cloud vendor. The data center 1110 and the data center 1111 are interconnected through an intra-region communication channel 133, and the communication channel 133 is established through a cross-availability-zone network provided by the cloud vendor. The data center 1111 and the data center 1110 may be located in different availability zones in a same city, or may be located in different availability zones in different cities. This is not limited in the present invention. It should be noted that, in another embodiment provided in the present invention, a quantity of major regions, a quantity of regions in each major region, and a quantity of data centers in each region are not limited to the quantities shown in the figure. For example, each major region may include one or more than two regions. This is not limited in the present invention.

In a scenario in which a tenant uses a cloud resource provided by the cloud vendor and binds an elastic public network resource to the cloud resource, the elastic public network resource and cloud resource of the tenant need to be in the same region in a related technology, and the cloud resource of the tenant is not supported to use an elastic IP across regions. To resolve the foregoing problem, embodiments of the present invention provide a method for configuring an elastic IP based on a cloud computing technology, an apparatus, and a system. The method is applied to a cloud management platform, and the cloud management platform is configured to manage an infrastructure. The cloud management platform establishes a communication channel, through a backbone network, between a data center in which a cloud resource of a tenant is located and a data center in which an elastic public network resource is located, so that the tenant can deploy the cloud resource based on a service requirement of the tenant, and an elastic public network resource provided by a cloud vendor in any region is deployed for the cloud resource of the tenant.

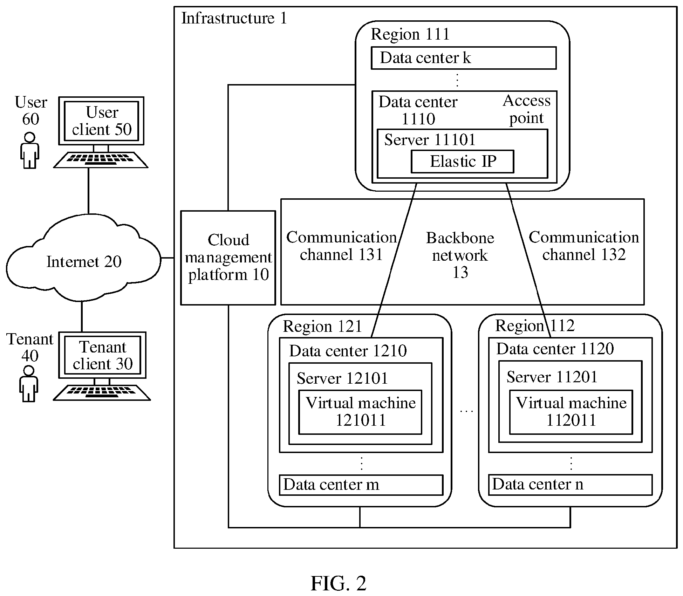

To describe a structure of a system for configuring an elastic IP according to an embodiment of the present invention, refer to FIG. 2. FIG. 2 is a diagram of a structure of a system for configuring an elastic IP according to the present invention. Specifically, FIG. 2 is a detailed description of an infrastructure including the data center 1110, the data center 1120, and the data center 1210 in FIG. 1. The following describes the structure of the system for configuring an elastic IP based on the diagram of the structure of the system for configuring an elastic IP in FIG. 2 and with reference to the diagram of distribution of data centers in FIG. 1. As shown in FIG. 2, an infrastructure 1 includes a cloud management platform 10, and further includes a data center 1110, ..., and a data center k that are set in a region 111, a data center 1210, ..., and a data center m that are set in a region 121, and a data center 1120, ..., and a data center n that are set in a region 112. The data center 1110 is an elastic public network access point of a tenant, a public network resource provided by a cloud vendor is deployed on a server 11101 of the data center 1110, and the public network resource includes an elastic IP and a public network bandwidth. There is a server 12101 in the data center 1210 that is set in the region 121, and a virtual machine 121011 of a tenant 40 is set on the server 12101. There is a server 11201 in the data center 1120 that is set in the region 112, and a virtual machine 112011 of the tenant 40 is set on the server 11201. With reference to FIG. 1, the region 111 and the region 112 are located in the major region 11, and the region 121 is located in the major region 12. That is, in a solution provided in embodiments of the present invention, the region 111 and the region 121 are located in different major regions, and the region 111 and the region 112 are located in a same major region. That is, the data center 1110 and the data center 1210 are located in different major regions, and the data center 1110 and the data center 1120 are located in different regions of a same major region. A cross-region backbone network 13 is set in the infrastructure 1, and the cross-region backbone network 13 is configured to connect cross-region data centers in the infrastructure 1. For example, the cloud management platform 10 establishes the communication channel 131 between the data center 1110 and the data center 1210 for the tenant 40 through the cross-region backbone network 13, and the cloud management platform 10 establishes the communication channel 132 between the data center 1110 and the data center 1120 for the tenant 40 through the cross-region backbone network 13. The tenant 40 may log in to the cloud management platform 10 by using a tenant account and a password through a tenant client 30 via the internet 20, configure, on the cloud management platform 10, a cloud resource including the virtual machine 121011 and the virtual machine 112011, set an elastic public network access point for the cloud resource, and configure an elastic IP and a public network bandwidth. It should be noted that, for ease of description, three regions and two communication channels are shown in the infrastructure 1 in embodiments of the present invention. However, embodiments of the present invention are not limited to a solution including only three regions and two communication channels. For example, no communication channel may be established based on a requirement of a tenant, or one, two, or more communication channels may be established based on a requirement of a tenant. This is not limited in embodiments of the present invention.

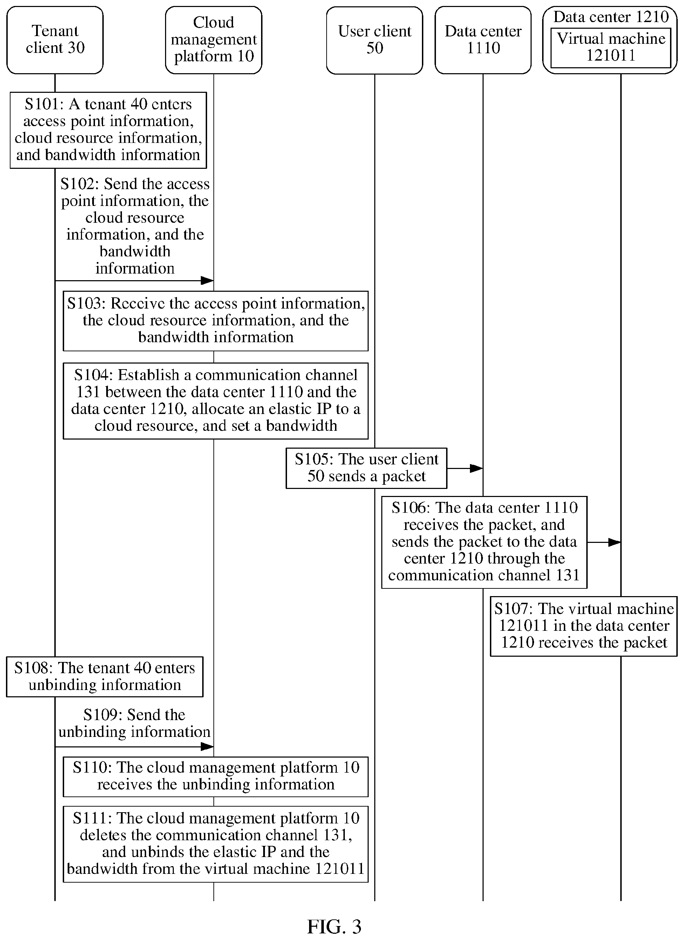

Based on the scenarios for configuring an elastic IP in FIG. 1 and FIG. 2, the following describes in detail a method for configuring an elastic IP based on a cloud computing technology provided in an embodiment of the present invention with reference to FIG. 3.

FIG. 3 is a method flowchart of a method for configuring an elastic IP based on a cloud computing technology according to an embodiment of the present invention. As shown in FIG. 3, the method includes but is not limited to the following steps.

S101: The tenant 40 enters access point information, cloud resource information, and bandwidth information.

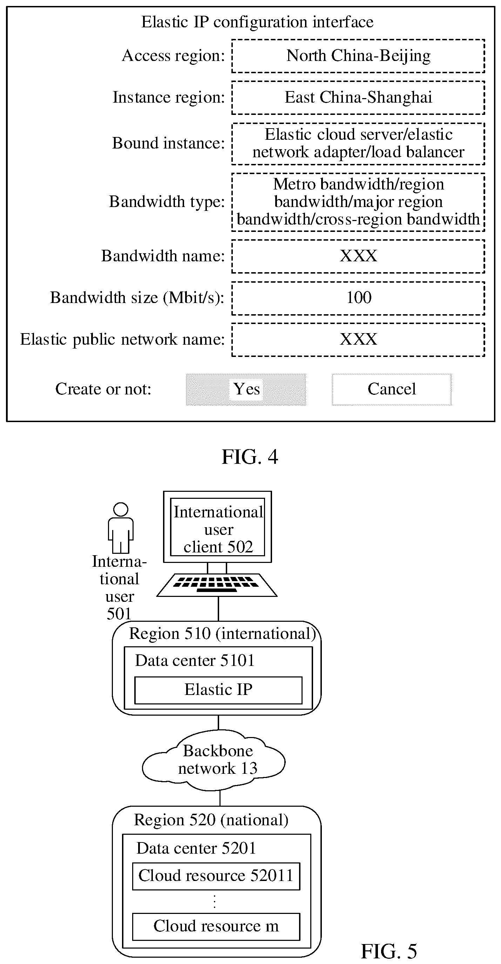

For example, the tenant 40 sets, through the tenant client 30 via the internet 20, the access point information, the cloud resource information, and the bandwidth information on an interface provided by the cloud management platform 10. For an embodiment of setting the access point information, the cloud resource information, and the bandwidth information by the tenant, refer to FIG. 4. FIG. 4 is a diagram of an elastic IP configuration interface according to an embodiment of the present invention. As shown in FIG. 4, items that can be configured by the tenant on the elastic IP configuration interface include an access region, an instance region, a bound instance, a bandwidth type, a bandwidth name, a bandwidth size, and an elastic public network name. For example, the access region is North China-Beijing, and the instance region is East China-Shanghai. Specifically, the bound instance is a virtual machine or an elastic cloud server in this embodiment. In another embodiment provided in the present invention, the bound instance includes, for example, a container, a bare metal server, a dedicated host, an elastic network adapter, or a load balancer. For the bandwidth type, specifically, in this embodiment, the data center 1210 in which the tenant virtual machine 121011 is located and the data center 1110 in which the access point is located are in different regions of different major regions, and the bandwidth type is, for example, a cross-region bandwidth. In another embodiment provided in the present invention, the bandwidth type may include a cross-region bandwidth, a major region bandwidth, a region bandwidth, and a metro bandwidth. This is to be described in the following embodiments. The bandwidth size is, for example, 100 Mbit/s. The bandwidth name and the elastic public network name are, for example, names specified by the tenant. It should be noted that FIG. 4 is merely a configuration interface provided in an embodiment of this application. In another embodiment provided in this application, configurable items may include one or more of the foregoing configuration items. This is not limited in the present invention.

Optionally, in an embodiment provided in the present invention, the bandwidth type may include the cross-region bandwidth, the major region bandwidth, the region bandwidth, and the metro bandwidth. The cross-region bandwidth is a bandwidth type used when an elastic public network resource and a cloud resource of the tenant are located in data centers across major regions. For example, the data center in which the elastic public network resource is located is in a Chinese Mainland major region, and the data center in which the cloud resource of the tenant is located is in an Asia Pacific major region. The major region bandwidth is a bandwidth type used when the elastic public network resource and the cloud resource of the tenant are located in data centers in different regions of a same major region. For example, the data center in which the elastic public network resource is located is in an East China region in the Chinese Mainland major region, and the data center in which the cloud resource of the tenant is located is in a North China region in the Chinese Mainland major region. The region bandwidth is a bandwidth type used when the elastic public network resource and the cloud resource of the tenant are located in data centers in different cities of a same region. For example, the data center in which the elastic public network resource is located is in Shanghai in the East China region, and the data center in which the cloud resource of the tenant is located is in Hangzhou in the East China region. The metro bandwidth is a bandwidth type used when the elastic public network resource and the cloud resource of the tenant are located in data centers in a same region and a same city. For example, the data center in which the elastic public network resource is located is in a Shanghai availability zone A of the East China region, and the data center in which the cloud resource of the tenant is located is in a Shanghai availability zone B of the East China region. Optionally, in an embodiment provided in the present invention, the cloud management platform 10 reminds the tenant 40 of a bandwidth type used by the tenant 40 when the tenant 40 configures an elastic public network resource for the cloud resource of the tenant 40.

Through division into different bandwidth types, the tenant can select the bandwidth type based on a service requirement of the tenant when configuring the bandwidth by using the elastic public network service, so that bandwidth operation of a backbone network and a cross-availability-zone network of the tenant and the cloud vendor are more refined. This facilitates cost control.

S102: The tenant 40 sends the access point information, the cloud resource information, and the bandwidth information.

For example, the access point information, the cloud resource information, and the bandwidth information that are entered by the tenant 40 by logging in to the cloud management platform 10 through the tenant client 30 via the internet 20 are sent to the cloud management platform 10 via the internet 20.

S103: The cloud management platform 10 receives the access point information, the cloud resource information, and the bandwidth information.

For example, the cloud management platform 10 receives, via the internet 20, the access point information, the cloud resource information, and the bandwidth information that are entered by the tenant 40 on the tenant client 30 in step S101 and step S102. In an embodiment provided in the present invention, with reference to FIG. 4, the foregoing content that can be set by the tenant 40 is obtained through an interface in the cloud management platform 10. For example, the content is obtained by an elastic public network information configuration interface of the cloud management platform 10. The interface is, for example, an application programming interface (Application Programming Interface, API), an API-based configuration interface, or another interaction interface that can interact with the tenant. This is not limited in this embodiment of the present invention.

S104: The cloud management platform 10 establishes the communication channel 131 between the data center 1110 and the data center 1210, allocates an elastic IP to the cloud resource, and sets a bandwidth.

For example, the cloud management platform 10 determines, based on the access point information and the cloud resource information entered by the tenant 40 in step S101, the data center 1110 in which the access point is located and the data center 1210 in which the cloud resource is located, establishes the communication channel 131 between the data center 1110 and the data center 1210 through the backbone network 13, allocates an elastic IP resource in the data center 1110 to the virtual machine 121011 in the data center 1210 based on the access point information and the cloud resource information entered by the tenant 40 in step S101, and sets the bandwidth for the communication channel 13 based on the bandwidth information entered by the tenant 40 in step S101.

S105: A user client 50 sends a packet.

For example, a user 60 sends the packet by using the user client 50, and a destination address of the packet is the elastic IP of the virtual machine 121011 of the tenant 40.

S106: The data center 1110 receives the packet, and sends the packet to the data center 1210 through the communication channel 131.

For example, the packet of the user 60 is sent, via the internet 20, to the data center 1110 located in the region 111. The data center 1110 receives the packet, parses a correspondence between the elastic IP and the virtual machine 121011 located in the data center 1210, and sends the packet to the data center 1210 through the communication channel 131.

S107: The virtual machine 121011 in the data center 1210 receives the packet.

For example, the packet is transmitted from the data center 1110 to the data center 1210 through the communication channel 131, and is transmitted to the virtual machine 121011 of the tenant 40 through a gateway, and the virtual machine 121011 receives the packet.

S108: The tenant 40 enters unbinding information.

For example, the tenant 40 enters, through the tenant client 30 via the internet 20, the unbinding information on an interface provided by the cloud management platform 10. In an embodiment provided in the present invention, the unbinding information entered by the tenant includes cloud resource information.

S109: The tenant 40 sends the unbinding information.

For example, the unbinding information entered by the tenant 40 by logging in to the cloud management platform 10 through the tenant client 30 via the internet 20 is sent to the cloud management platform 10 via the internet 20.

S110: The cloud management platform 10 receives the unbinding information.

For example, the cloud management platform 10 receives, via the internet 20, the unbinding information entered by the tenant 40 on the tenant client 30 in step S108 and step S109. In an embodiment provided in the present invention, the unbinding information content that can be set by the tenant 40 is obtained through an interface in the cloud management platform 10. For example, the content is obtained by an unbinding information configuration interface of the cloud management platform 10. The interface is, for example, an application programming interface (Application Programming Interface, API), an API-based configuration interface, or another interaction interface that can interact with the tenant. This is not limited in this embodiment of the present invention.

S111: The cloud management platform 10 deletes the communication channel 131, and unbinds the elastic IP and the bandwidth from the virtual machine 121011.

For example, the cloud management platform 10 deletes the communication channel 13 between the data center 1110 and the data center 1210 established through the backbone network 13, the cloud management platform 10 notifies a corresponding gateway to delete a correspondence between the elastic IP and the virtual machine 121011, the cloud management platform 10 deletes the correspondence between the elastic IP and the virtual machine 121011 recorded by the cloud management platform 10, and the cloud management platform 10 reclaims a bandwidth resource allocated to the virtual machine 121011.

Optionally, for step S108 to step S111, in another embodiment provided in the present invention, the tenant 40 enters information about binding of the virtual machine 112011 in the data center 1120 and the cloud resource located in the data center 1110. After receiving the binding information, the cloud management platform 10 automatically unbinds the virtual machine 121011 in the data center 1210 that has been bound to the elastic IP of the data center 1110, and binds the cloud resource information newly entered by the tenant 40, that is, the virtual machine 112011 in the data center 1120, to the elastic IP in the data center 1110.

In the foregoing embodiment of the method for configuring an elastic IP, the data center 1110 in which the elastic public network resource is located is in the region 111 of the major region 11, and the data center 1210 in which the cloud resource of the tenant 40, that is, the virtual machine 121011, is located is in the region 121 of the major region 12. The two data centers are located in different regions of different major regions, and a bandwidth that is set by the cloud management platform 10 for the communication channel established between the two data centers is, for example, a cross-region bandwidth.

Optionally, in another embodiment provided in the present invention, the data center 1110 in which the elastic public network resource is located is in the region 111 of the major region 11, and the data center 1120 in which another cloud resource of the tenant 40, that is, the virtual machine 112011, is located is in the region 112 of the major region 11. That is, the two data centers are located in different regions of the same major region. For example, in this embodiment, with reference to the method for configuring an elastic IP in FIG. 3, in step S101, the bandwidth type in the bandwidth information entered by the tenant 40 may be a major region bandwidth. In step S104, the cloud management platform 10 establishes the communication channel 132 between the data center 1110 and the data center 1120 through the cross-region backbone network 13. Other steps in this embodiment may be obtained by analogy from the foregoing embodiment, and details are not described herein again.

Optionally, in another embodiment provided in the present invention, the data center 1110 in which the elastic public network resource is located is in the region 111 of the major region 11, another cloud resource of the tenant is located in the data center 1111, and the data center 1111 is located in the region 111 of the major region 11. That is, the two data centers are located in the same region of a same major region, and the two data centers are located in different cities. For example, in this embodiment, with reference to the method for configuring an elastic IP in FIG. 3, in step S101, the bandwidth type in the bandwidth information entered by the tenant 40 may be a region bandwidth. In step S104, the cloud management platform 10 establishes a communication channel between the data center 1110 and the data center 1111 through a cross-availability-zone network. Other steps in this embodiment may be obtained by analogy from the foregoing embodiment, and details are not described herein again.

Optionally, in another embodiment provided in the present invention, the data center 1110 in which the elastic public network resource is located is in the region 111 of the major region 11, another cloud resource of the tenant is located in the data center 1112, and the data center 1112 is located in the region 111 of the major region 11. That is, the two data centers are located in the same region of the same major region, and the two data centers are located in a same city. For example, in this embodiment, with reference to the method for configuring an elastic IP in FIG. 3, in step S101, the bandwidth type in the bandwidth information entered by the tenant 40 may be a metro bandwidth. In step S104, the cloud management platform 10 establishes a communication channel between the data center 1110 and the data center 1112 through a cross-availability-zone network. Other steps in this embodiment may be obtained by analogy from the foregoing embodiment, and details are not described herein again.

It should be noted that the cross-region bandwidth, the major region bandwidth, the region bandwidth, and the metro bandwidth are merely used as names provided in this embodiment of the present invention, and indicate various distribution situations of the data center in which the cloud resource of the tenant is located and the data center in which the elastic public network resource is located. In another embodiment provided in the present invention, other descriptions may be used as names of various distribution situations including the distribution situations. This embodiment of the present invention imposes no limitation on the expressions.

It should be noted that, in a related technology, there are also a few expressions of "backbone network" to cover two scenarios "cross-region backbone network" and "cross-availability-zone network" in this embodiment of the present invention. A person skilled in the art should know that a difference between such expressions does not affect various data center distribution scenarios in the foregoing embodiment. This embodiment of the present invention imposes no limitation on the expressions.

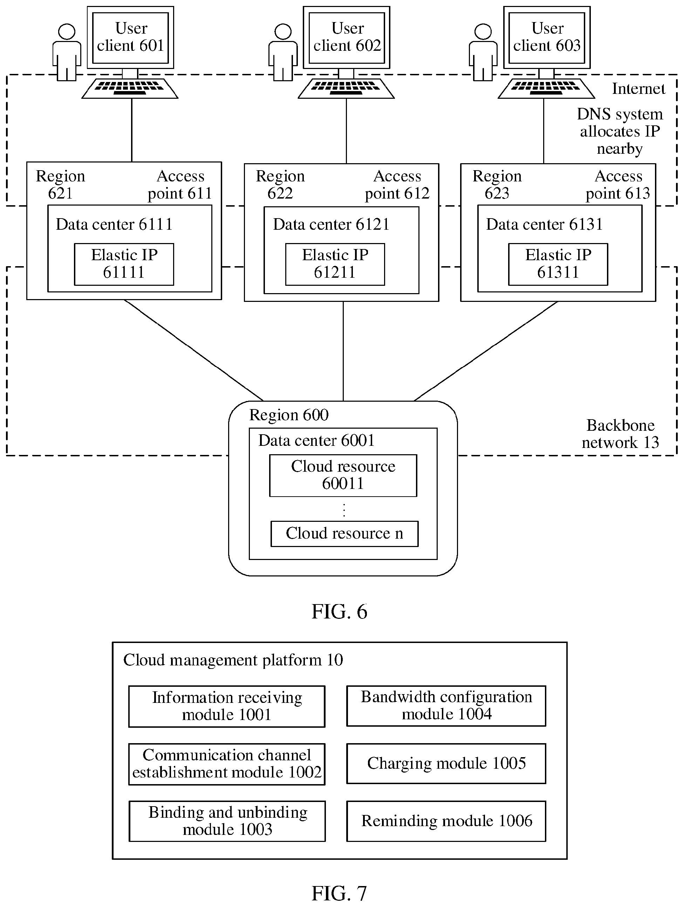

Optionally, in an embodiment provided in the present invention, the cloud management platform 10 charges the tenant 40 for the elastic public network resource. For example, with reference to a functional module apparatus structure of the cloud management platform in FIG. 7, the cloud management platform 10 includes a charging module 1005. Optionally, the charging module includes a charging interface, configured to charge the tenant 40 for the elastic public network resource. A fee of the elastic public network resource includes one or any combination of an elastic IP fee, a public network bandwidth fee, a cross-region backbone network bandwidth fee, and a cross-availability-zone network fee. Optionally, in an embodiment provided in the present invention, the cross-region backbone network bandwidth fee and/or the cross-availability-zone network fee are/is related to the bandwidth type.

FIG. 5 is a diagram of a structure for elastic public network access according to an embodiment of this application. As shown in FIG. 5, in an embodiment provided in the present invention, a tenant deploys a cloud resource of the tenant in a data center in a national region, and sets a public network access point located in an international region for the cloud resource of the tenant. Therefore, an international terminal user served by the tenant can access a nearby elastic public network, and access the national cloud resource through a cross-border backbone network of a cloud vendor, so that the international terminal user of the tenant accesses the cloud resource of the tenant at a low latency. For example, the tenant 40 deploys a cloud resource 52011 of the tenant 40 in a data center 5201 in a national region 520. The tenant 40 binds the cloud resource of the tenant 40 to an elastic IP resource in a data center 5101 in an international region 510. The cloud management platform 10 establishes a communication channel for the data center 5101 and the data center 5201 through the backbone network 13. An international user 501 is a user of the cloud resource 52011 of the tenant 40, and the international user 501 sends, through an international user client 502 via the internet, a packet for accessing the cloud resource 52011, and a destination address of the packet is an elastic IP in the data center 5101. The packet is first sent to the data center 5101. The communication channel between the data center 5101 and the data center 5201 transmits the packet from the data center 5101 to the cloud resource in the data center 5201.

FIG. 6 is a diagram of a DNS system in cooperation with elastic IP configuration according to an embodiment of this application. As shown in FIG. 6, in an embodiment provided in the present invention, a tenant deploys a cloud resource of the tenant in an infrastructure, and based on a service requirement, for example, deploys elastic public network access points of the cloud resource in a plurality of regions in which users of the cloud resource are centralized, and configures an intelligent domain name service (Domain Name System, DNS). When a terminal user wants to access the cloud resource of the tenant, the DNS service returns, based on information such as a region in which the terminal user is located, a corresponding elastic IP to the terminal user, so that the terminal user accesses the resource at a low latency. This provides a highly reliable and low-cost public network access solution for the tenant. For example, the tenant 40 deploys a cloud resource 60011 in a data center 6001 of a region 600. The tenant 40 sets an elastic IP 61111 for the cloud resource 60011 of the tenant 40 at an access point 611 of a region 621, sets an elastic IP 61212 for the cloud resource 60011 of the tenant 40 at an access point 612 of a region 622, and sets an elastic IP 61311 for the cloud resource 60011 of the tenant 40 at an access point 613 of a region 623. The cloud management platform 10 separately establishes communication channels between a data center 6111 and the data center 6001, between a data center 6121 and the data center 6001, and between a data center 6131 and the data center 6001 through the backbone network 13. When a user near the region 621 wants to access the cloud resource 60011, the user sends, through a user client 601 via the internet, a packet carrying a domain name of the cloud resource 60011. A DNS system returns the elastic IP 61111 located in the region 621 to the user based on the region 621 of the user, and so on. The DNS system returns the elastic IP 61211 to a user near the region 622 and returns the elastic IP 61311 to a user near the region 623. In another embodiment provided in the present invention, the communication channel between the data center 6111 and the data center 6001, the communication channel between the data center 6121 and the data center 6001, and the communication channel between the data center 6131 and the data center 6001 may be separately established through the cross-region backbone network, or may be established through the cross-availability-zone network. This is not limited in this embodiment. In another embodiment provided in the present invention, an influencing factor of a policy for the DNS service to return an elastic IP to the user includes a region of a terminal user, and may also include another factor, for example, an operator of the terminal user. This is not limited in this embodiment.

Optionally, a service instance or the cloud resource in this embodiment of the present invention includes one or any combination of a virtual machine, a container, a bare metal server, and a dedicated host.

FIG. 7 is a diagram of a structure of a cloud management platform apparatus according to an embodiment of this application. As shown in FIG. 7, a cloud management platform 10 includes an information receiving module 1001, a communication channel establishment module 1002, a binding and unbinding module 1003, a bandwidth configuration module 1004, a charging module 1005, and a reminding module 1006. The information receiving module 1001 is configured to perform an action of receiving the access point information, the cloud resource information, and the bandwidth information entered by the tenant in step S103 in the embodiment in FIG. 3, and is further configured to perform an action of receiving the unbinding information entered by the tenant in step S110. The communication channel establishment module 1002 is configured to perform an action of establishing the communication channel between the data centers in step S104 in the embodiment in FIG. 3. The binding and unbinding module 1003 is configured to perform an action of allocating the elastic IP to the cloud resource in step S104 in the embodiment in FIG. 3, and is further configured to perform an action of unbinding the elastic IP and the bandwidth from the virtual machine 121011 in step S111. The bandwidth configuration module 1004 is configured to perform an action of setting the bandwidth for the communication channel between the cloud resource and the elastic public network resource in step S104 in the embodiment in FIG. 3. The charging module 1005 is configured to perform an action of charging the tenant for the elastic public network resource in the foregoing embodiment. The reminding module 1006 is configured to perform an action of reminding the tenant of a bandwidth type used when the tenant configures the elastic public network resource for the cloud resource of the tenant in the foregoing embodiment. The information receiving module 1001, the communication channel establishment module 1002, the binding and unbinding module 1003, the bandwidth configuration module 1004, the charging module 1005, and the reminding module 1006 may all be implemented by using software or hardware. For example, the following uses the information receiving module 1001 as an example to describe an implementation of the information receiving module 1001. Similarly, for implementations of the communication channel establishment module 1002, the binding and unbinding module 1003, the bandwidth configuration module 1004, the charging module 1005, and the reminding module 1006, refer to the implementation of the information receiving module.

A module is used as an example of a software functional unit, and the information receiving module 1001 may include code that is run on a computing instance. The computing instance may include at least one of a physical host (computing device), a virtual machine, and a container. Further, there may be one or more computing instances. For example, the information receiving module 1001 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. The VPCs are interconnected through the communication gateway.

The module is used as an example of a hardware functional unit, and the detection module may include at least one computing device, for example, a server. Alternatively, the detection module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the detection module may be distributed in a same region, or may be distributed in different regions. A plurality of computing devices included in the detection module may be distributed in a same AZ, or may be distributed in different AZs. Similarly, the plurality of computing devices included in the detection module may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the information receiving module 1001, the communication channel establishment module 1002, the binding and unbinding module 1003, the bandwidth configuration module 1004, the charging module 1005, and the reminding module 1006 may be configured to perform any step in the method for configuring an elastic IP. The steps implemented by the information receiving module 1001, the communication channel establishment module 1002, the binding and unbinding module 1003, the bandwidth configuration module 1004, the charging module 1005, and the reminding module 1006 may be specified as required. The information receiving module 1001, the communication channel establishment module 1002, the binding and unbinding module 1003, the bandwidth configuration module 1004, the charging module 1005, and the reminding module 1006 each implement a different step in the method for configuring an elastic IP, to implement all functions of the cloud management platform.

This application further provides a public cloud system, including an access point, a cloud resource, and a backbone network. The access point, the cloud resource, and the backbone network may all be implemented by using software, or may be implemented by using hardware. For example, the following describes an implementation of the access point. Similarly, for implementations of the cloud resource and the backbone network, refer to the implementation of the access point.

A module is used as an example of a software functional unit, and the access point may include code that is run on a computing instance. The computing instance may be at least one of computing devices such as a physical host (computing device), a virtual machine, and a container. Further, there may be one or more computing devices. For example, the access point may include code that is run on a plurality of hosts/virtual machines/containers. It should be noted that the plurality of hosts/virtual machines/containers configured to run the application may be distributed in a same region or may be distributed in different regions. The plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same VPC, or may be distributed in a plurality of VPCs. Generally, one VPC is set in one region. A communication gateway needs to be set in each VPC for communication between two VPCs in a same region or between VPCs in different regions. The VPCs are interconnected through the communication gateway.

The module is used as an example of a hardware functional unit, and the cloud management platform may include at least one computing device, for example, a server. Alternatively, the cloud management platform may be a device implemented by using an ASIC, a PLD, or the like. The PLD may be implemented by a CPLD, an FPGA, GAL, or any combination thereof.

A plurality of computing devices included in the access point may be distributed in a same region, or may be distributed in different regions. The plurality of computing devices included in the access point may be distributed in a same AZ, or may be distributed in different AZs. Similarly, the plurality of computing devices included in the access point may be distributed in a same VPC, or may be distributed in a plurality of VPCs. The plurality of computing devices may be any combination of computing devices such as the server, the ASIC, the PLD, the CPLD, the FPGA, and the GAL.

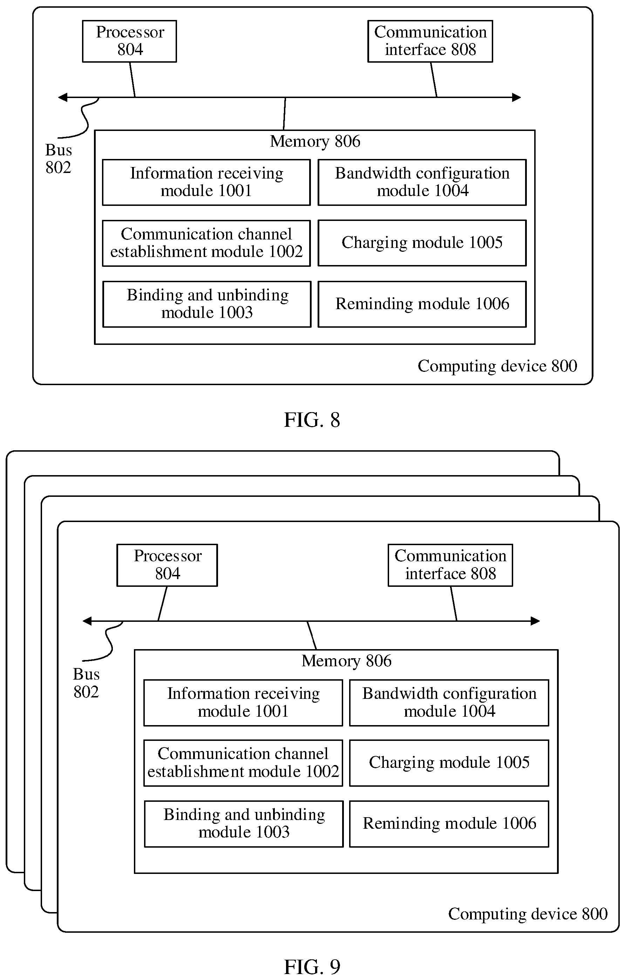

This application further provides a computing device 800. As shown in FIG. 8, the computing device 800 includes a bus 802, a processor 804, a memory 806, and a communication interface 808. The processor 804, the memory 806, and the communication interface 808 communicate with each other through the bus 802. The computing device 800 may be a server or a terminal device. It should be understood that a quantity of processors and a quantity of memories in the computing device 800 are not limited in this application.

The bus 802 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 8, but it does not mean that there is only one bus or only one type of bus. The bus 802 may include a path for transmitting information between components (for example, the memory 806, the processor 804, and the communication interface 808) of the computing device 800.

The processor 804 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), for example, a random access memory (random access memory, RAM). The processor 804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 806 stores executable program code, and the processor 804 executes the executable program code to separately implement functions of the information receiving module 1001, the communication channel establishment module 1002, the binding and unbinding module 1003, the bandwidth configuration module 1004, the charging module 1005, and the reminding module 1006, to implement any method for configuring an elastic IP. That is, the memory 806 stores instructions used to perform any method for configuring an elastic IP.

Alternatively, the memory 806 stores executable code, and the processor 804 executes the executable code to separately implement functions of the foregoing access point, to implement any elastic IP access method. That is, the memory 806 stores instructions used to perform any method for configuring an elastic IP.

The communication interface 808 implements communication between the computing device 800 and another device or a communication network through a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 800. The memory 806 in one or more computing devices 800 in the computing device cluster may store same instructions for performing any method for configuring an elastic IP.

In some possible implementations, the memories 806 in the one or more computing devices 800 in the computing device cluster may also separately store some instructions for performing any method for configuring an elastic IP. In other words, a combination of one or more computing devices 800 may jointly execute instructions for performing any method for configuring an elastic IP.

It should be noted that, memories 806 in different computing devices 800 in the computing device cluster may store different instructions, which are respectively used to perform a part of functions of the cloud management node. That is, instructions stored in the memories 806 in different computing devices 800 may implement functions of one or more of the information receiving module 1001, the communication channel establishment module 1002, the binding and unbinding module 1003, the bandwidth configuration module 1004, the charging module 1005, and the reminding module 1006.

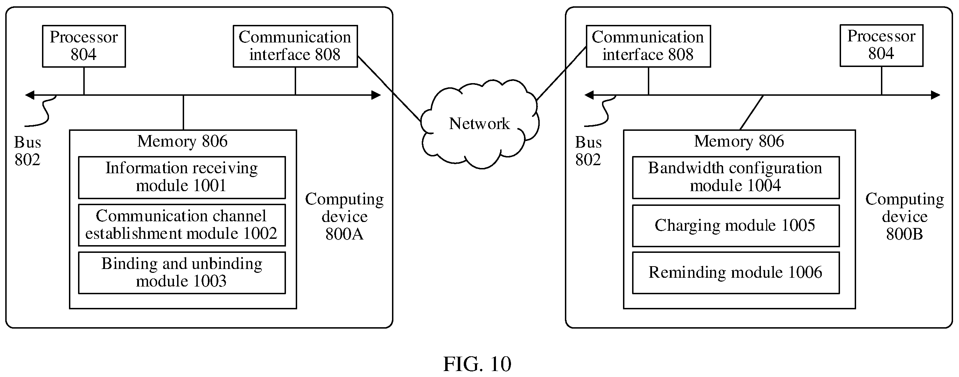

In some possible implementations, the one or more computing devices in the computing device cluster may be connected through a network. The network may be a wide area network, a local area network, or the like. FIG. 10 shows a possible implementation. As shown in FIG. 10, two computing devices 800A and 800B are connected via a network. Specifically, each computing device is connected to the network through a communication interface of the computing device. In this possible implementation, a memory 806 in the computing device 800A stores instructions for performing functions of the information receiving module 1001, the communication channel establishment module 1002, and the binding and unbinding module 1003. In addition, a memory 806 in the computing device 800B stores instructions for performing functions of the bandwidth configuration module 1004, the charging module 1005, and the reminding module 1006.

A connection manner between computing device clusters shown in FIG. 10 may be that, considering that an elastic IP needs to be configured in any method for configuring an elastic IP provided in this application, it is considered that functions implemented by the bandwidth configuration module 1004, the charging module 1005, and the reminding module 1006 are performed by the computing device 800B.

It should be understood that functions of the computing device 800A shown in FIG. 10 may alternatively be completed by a plurality of computing devices 800. Similarly, functions of the computing device 800B may alternatively be completed by a plurality of computing devices 800.

An embodiment of this application further provides another computing device cluster. For a connection relationship between computing devices in the computing device cluster, refer to the connection manners of the computing device cluster in FIG. 9 and FIG. 10. A difference lies in that the memory 806 in one or more computing devices 800 in the computing device cluster may store same instructions for performing any method for configuring an elastic IP.

In some possible implementations, the memories 806 in the one or more computing devices 800 in the computing device cluster may also separately store some instructions for performing any method for configuring an elastic IP. In other words, a combination of one or more computing devices 800 may jointly execute instructions for performing any method for configuring an elastic IP.

It should be noted that memories 806 in different computing devices 800 in the computing device cluster may store different instructions, which are used to perform a part of functions of the cloud management platform. That is, the instructions stored in the memories 806 in the different computing devices 800 may implement functions of one or more apparatuses of the cloud management platform and the infrastructure.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform any method for configuring an elastic IP.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instruction instructs a computing device to perform any method for configuring an elastic IP.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A method for configuring an elastic IP based on a cloud computing technology, wherein the method is applied to a cloud management platform, the cloud management platform is configured to manage an infrastructure, the infrastructure comprises a first data center that is set in a first availability zone and a second data center that is set in a second availability zone, and the method comprises:
receiving, by the cloud management platform, access point information entered by a tenant, wherein the access point information indicates an access point of an elastic IP purchased by the tenant, and the access point is located in the first data center in the first availability zone;
receiving, by the cloud management platform, first cloud resource information entered by the tenant, wherein the first cloud resource information indicates a first cloud resource bound to the elastic IP and the second availability zone in which the first cloud resource is located, and the first cloud resource is set in the second data center in the second availability zone; and
establishing, by the cloud management platform, a first communication channel between the first data center and the second data center for the tenant, wherein the first communication channel is used to transmit a packet that is sent from a client to the access point and whose destination address is the elastic IP from the first data center to the cloud resource in the second data center.

2. The method according to claim 1, wherein the method further comprises:
receiving, by the cloud management platform, first unbinding information entered by the tenant, wherein the first unbinding information indicates the cloud management platform to unbind the elastic IP from the first cloud resource.

3. The method according to claim 2, wherein the method further comprises:
receiving, by the cloud management platform, second cloud resource information entered by the tenant, wherein the second cloud resource information indicates a second cloud resource bound to the elastic IP and a third availability zone in which the second cloud resource is located, and the second cloud resource is set in a third data center in the third availability zone;
binding, by the cloud management platform, the elastic IP to the second cloud resource; and
establishing, by the cloud management platform, a second communication channel between the first data center and the third data center for the tenant, wherein the second communication channel is used to transmit a packet that is sent from the client to the access point and whose destination address is the elastic IP from the first data center to the cloud resource in the third data center.

4. The method according to claim 1, wherein the method further comprises:
receiving, by the cloud management platform, second cloud resource information entered by the tenant, wherein the second cloud resource information indicates a second cloud resource bound to the elastic IP and a third availability zone in which the second cloud resource is located, and the second cloud resource is set in a third data center in the third availability zone;
unbinding, by the cloud management platform, the elastic IP from the first cloud resource;
binding, by the cloud management platform, the elastic IP to the second cloud resource; and
establishing, by the cloud management platform, a third communication channel between the first data center and the third data center for the tenant, wherein the third communication channel is used to transmit a packet that is sent from the client to the access point and whose destination address is the elastic IP from the first data center to the cloud resource in the third data center.

5. The method according to claims 1 to 4, wherein the method further comprises:
receiving, by the cloud management platform, bandwidth configuration information entered by the tenant, wherein the bandwidth configuration information indicates a bandwidth of the elastic IP; and
setting, by the cloud management platform, the bandwidth for the communication channel.

6. The method according to claims 1 to 5, wherein a cross-region backbone network is further set in the infrastructure, the cross-region backbone network is used to connect cross-region data centers in the infrastructure, and the establishing, by the cloud management platform, a communication channel between the first data center and the second data center for the tenant comprises:
establishing, by the cloud management platform, the communication channel between the first data center and the second data center through the cross-region backbone network when the first availability zone and the second availability zone are located in different regions.

7. The method according to claim 6, wherein that the first availability zone and the second availability zone are located in different regions comprises: the first availability zone and the second availability zone are located indifferent regions of a same major region different regions of a same major region.

8. The method according to claim 6, wherein that the first availability zone and the second availability zone are located in different regions comprises: the first availability zone and the second availability zone are located in different major regions.

9. The method according to claim 7 or 8, wherein the method further comprises:
charging, by the cloud management platform, the tenant for using the cross-region backbone network.

10. The method according to claims 1 to 5, wherein a cross-availability-zone network is further set in the infrastructure, the cross-availability-zone network is used to connect cross-availability-zone data centers in a same region in the infrastructure, and the establishing, by the cloud management platform, a communication channel between the first data center and the second data center for the tenant comprises:
establishing, by the cloud management platform, the communication channel between the first data center and the second data center in the cross-availability-zone network when the first availability zone and the second availability zone are located in a same region.

11. The method according to claim 10, wherein that the first availability zone and the second availability zone are located in a same region comprises: the first availability zone and the second availability zone are located in a same city.

12. The method according to claim 10, wherein that the first availability zone and the second availability zone are located in a same region comprises: the first availability zone and the second availability zone are located in different cities of a same region.

13. The method according to claim 11 or 12, wherein the method further comprises:
charging, by the cloud platform, the tenant for using the cross-availability-zone network.

14. The method according to any one of claims 6 to 13, wherein the method further comprises:
reminding, by the cloud platform, the tenant of a bandwidth type used by the tenant, wherein the bandwidth type is determined based on a region in which the first availability zone and the second availability zone are located.

15. A cloud management platform, wherein the cloud management platform is configured to manage an infrastructure, the infrastructure comprises a first data center that is set in a first availability zone and a second data center that is set in a second availability zone, and the cloud management platform comprises:
an information receiving module, configured to receive access point information entered by a tenant, wherein the access point information indicates an access point of an elastic IP purchased by the tenant, and the access point is located in the first data center in the first availability zone, wherein
the information receiving module is further configured to receive first cloud resource information entered by the tenant belongs, wherein the first cloud resource information indicates a first cloud resource bound to the elastic IP and the second availability zone in which the first cloud resource is located, and the first cloud resource is set in the second data center in the second availability zone;
a communication channel establishment module, configured to establish a first communication channel between the first data center and the second data center for the tenant, wherein the first communication channel is used to transmit a packet that is sent from a client to the access point and whose destination address is the elastic IP from the first data center to the cloud resource in the second data center; and
a binding and unbinding module, configured to bind the elastic IP to the first cloud resource based on the access point information and cloud resource information.

16. The cloud management platform according to claim 15, wherein
the information receiving module is further configured to receive first unbinding information entered by the tenant, wherein the first unbinding information indicates the binding and unbinding module of the cloud management platform to unbind the elastic IP from the first cloud resource.

17. The cloud management platform according to claim 16, wherein
the information receiving module is further configured to receive second cloud resource information entered by the tenant, wherein the second cloud resource information indicates a second cloud resource bound to the elastic IP and a third availability zone in which the second cloud resource is located, and the second cloud resource is set in a third data center in the third availability zone;
the binding and unbinding module is further configured to bind the elastic IP to the second cloud resource; and
the communication channel establishment module is further configured to establish a second communication channel between the first data center and the third data center for the tenant, wherein the second communication channel is used to transmit a packet that is sent from the client to the access point and whose destination address is the elastic IP from the first data center to the cloud resource in the third data center.

18. The cloud management platform according to claim 15, wherein
the communication channel establishment module is further configured to establish a third communication channel between the first data center and the third data center for the tenant, wherein the third communication channel is used to transmit a packet that is sent from the client to the access point and whose destination address is the elastic IP from the first data center to the cloud resource in the third data center.

19. The cloud management platform according to claims 15 to 18, wherein the information receiving module is further configured to receive bandwidth configuration information entered by the tenant, wherein the bandwidth configuration information indicates a bandwidth of the elastic IP; and the cloud management platform further comprises:
a bandwidth configuration module, configured to set the bandwidth for the communication channel.

20. The cloud management platform according to claims 15 to 19, wherein a cross-region backbone network is further set in the infrastructure, the cross-region backbone network is used to connect cross-region data centers in the infrastructure, and the communication channel establishment module is further configured to establish the communication channel between the first data center and the second data center through the cross-region backbone network when the first availability zone and the second availability zone are located in different regions.

21. The cloud management platform according to claim 20, wherein that the first availability zone and the second availability zone are located in different regions comprises: the first availability zone and the second availability zone are located in different regions of a same major region.

22. The cloud management platform according to claim 20, wherein that the first availability zone and the second availability zone are located in different regions comprises: the first availability zone and the second availability zone are located in different major regions.

23. The cloud management platform according to claims 21 and 22, wherein the cloud management platform further comprises:
a charging module, configured to charge the tenant for using the cross-region backbone network.

24. The cloud management platform according to claims 15 to 19, wherein a cross-availability-zone network is further set in the infrastructure, the cross-availability-zone network is used to connect cross-availability-zone data centers in a same region in the infrastructure, and the communication channel establishment module is further configured to establish the communication channel between the first data center and the second data center through the cross-availability-zone network when the first availability zone and the second availability zone are located in a same region.

25. The cloud management platform according to claim 24, wherein that the first availability zone and the second availability zone are located in a same region comprises: the first availability zone and the second availability zone are located in a same city.

26. The cloud management platform according to claim 24, wherein that the first availability zone and the second availability zone are located in a same region comprises: the first availability zone and the second availability zone are located in different cities of a same region.

27. The cloud management platform according to claims 25 and 26, wherein
the charging module is further configured to charge the tenant for using the cross-availability-zone network.

28. The cloud management platform according to claims 20 to 27, wherein the cloud management platform further comprises:
a reminding module, configured to remind the tenant of a bandwidth type used by the tenant, wherein the bandwidth type is determined based on a region in which the first availability zone and the second availability zone are located.

29. A public cloud system, comprising:
an access point, located in a first data center in a first region and configured with an elastic IP;
a cloud resource, located in a second data center in a second region, wherein the first region and the second region are located in different geographical regions; and
a backbone network, configured to connect the first data center in the first region and the second data center in the second region, wherein
the access point is further configured to receive a packet whose destination address is the elastic IP from a client located in the first region, and send the packet to the cloud resource in the second data center through the backbone network.

30. A computing device cluster, comprising at least one computing device, wherein each computing device comprises a processor and a memory; and
the processor in the at least one computing device is configured to execute instructions stored in the memory in the at least one computing device, to enable the computing device cluster to perform the method according to any one of claims 1 to 14.

31. A computer program product comprising instructions, wherein when the instructions are run by a computing device cluster, the computing device cluster is enabled to perform the method according to any one of claims 1 to 14.

32. A computer-readable storage medium, comprising computer program instructions, wherein when the computer program instructions are executed by a computing device cluster, the computing device cluster performs the method according to any one of claims 1 to 14.
